# EUROPEAN PATENT SPECIFICATION

(11) **EP 2 680 669 B1**
(45) Date of publication and mention of the grant of the patent: **28.06.2017**
(21) Application number: 13158211.6
(22) Date of filing: 07.03.2013
(51) Int. Cl.: H05B 33/08

(54) **Light emitting diode driving apparatus, driving method of light emitting diode, and computer-readable recording medium**
Lichtemittierende Diodenansteuervorrichtung, Ansteuerverfahren einer lichtemittierenden Diode und computerlesbares Aufzeichnungsmedium
Appareil de commande de diode électroluminescente, procédé de commande de diode électroluminescente et support d'enregistrement lisible par ordinateur

(30) Priority: 27.06.2012 KR 20120069163
(43) Date of publication of application: 01.01.2014
(73) Proprietor: Samsung Electronics Co., Ltd., Gyeonggi-do 443-742 (KR)
(72) Inventor: Lee, Sang-hoon, Gyeonggi-do (KR); Lee, Myoung-jun, Gyeonggi-do (KR); Hyeon, Byeong-cheol, Gyeonggi-do (KR)
(74) Representative: Appleyard Lees IP LLP

(56) References cited:
- US-A1- 2009 230 874
- US-A1- 2010 013 395

## Description

### BACKGROUND

### 1. Field

Exemplary embodiments disclosed herein relate to a light emitting diode (LED) driving apparatus, a LED driving method, and a computer-readable recording medium. More particularly, exemplary embodiments disclosed herein relate to a light emitting diode driving apparatus, a LED driving method, and a computer-readable recording medium which can reduce heat of a switching component and control independently each of a plurality of LED arrays.

### 2. Description of the Related Art

Since a liquid crystal display (LCD) is thin and light, and has a driving voltage and power consumption which is lower than other display apparatuses, liquid crystal displays are widely used. However, since the liquid crystal display cannot emit light by itself and is a non-light emitting component, the liquid crystal display needs a separate backlight unit to supply light.

Cold cathode fluorescent lamps (CCFLs), light emitting diodes (LEDS), etc. are often used as a backlight light source of the liquid crystal display. The cold cathode fluorescent lamps may cause environmental pollution because of mercury. Further, cold cathode fluorescent lamps have a slow speed of response and lower color reproducibility, and are not suitable to make lighter, slimmer and smaller LCD panels.

In contrast, the LED does not use environmentally harmful substances and is therefore environmentally friendly, and has the advantage of being impulse-driven. Further, since LED technology has excellent color reproducibility, can randomly change luminance, color temperature, etc. by adjusting the amount of light of red, green and blue LEDs, and is suitable for manufacturing lighter, slimmer and smaller LCD panels, the LED is often used as a backlight light source of LCD panels. In an LCD backlight employing LEDs, in order to improve the image quality and to reduce power consumption, current being supplied to the LEDs is varied corresponding to brightness information of images.

Recently, display apparatuses with high definition and built-in 3D functions use an LED backlight unit configured of a plurality of channels (or a plurality of LED arrays). A current source apparatus which can independently control current of each of the channels is required to drive the LED backlight unit configured with the plurality of channels. For current control, a conventional LED backlight unit uses a switch mode type circuit or a linear mode type circuit.

US 2010/0013395 A1 describes an LED driver controller comprising a voltage regulator for controlling an output voltage to a top of a plurality of LED strings responsive to at least a reference voltage. A plurality of first circuitries each associated with a node at a bottom of each of the plurality of LED strings compares a voltage at the bottom of each of the plurality of LED strings with a high reference voltage and a low reference voltage. Control logic generates a first control signal when the voltage at the bottom of each node of the plurality of LED strings exceeds the high reference voltage and generates a second control signal when the voltage at least one of node of the plurality of LED strings falls below the low reference voltage. Second circuitry responsive to the first control signal and the second control signal generates the reference voltage. The reference voltage is controlled to cause the voltage at the bottom of the lowest voltage node of the plurality of LED strings to remain between the high reference voltage and the low reference voltage.

US 2009/0230874 A1 describes techniques for dynamic headroom control in a light emitting diode (LED) system. An output voltage is provided to drive a plurality of LED strings. A feedback controller monitors the tail voltages of the LED strings to identify the minimum tail voltage and adjusts the output voltage based on the lowest tail voltage. The LED strings grouped into subsets and the feedback controller is segmented such that, for a certain duration, the minimum tail voltage is determined for each subset. The minimum tail voltages of the subsets are used to determine the overall minimum tail voltage of the plurality of LED strings for the certain duration so as to control the output voltage in the following duration. The segments of the feedback controller can be implemented in separate integrated circuit (IC) packages, thereby facilitating adaption to different numbers of LED strings by integrating the corresponding number of IC packages.

The conventional switch mode type circuit is provided with a complete power conversion circuit for each LED array, and can perform current control regardless of variation of the forward voltage Vf of each LED array. However, since power components having the same function are used redundantly, there is a drawback that the size and price of the circuit are increased.

The conventional linear mode type circuit is provided with a variable voltage source apparatus to control total voltage thereof and linear switches to separately control current of each channel. Therefore, the size of the conventional linear mode type circuit is relatively small and the price of the entire circuit is reduced, as compared to the conventional switch mode type circuit. However, since an increase in a variation of the forward voltage Vf of each LED array causes a corresponding increase in heat of the linear switch, efficiency may be reduced and a reliability problem may occur.

### SUMMARY

The exemplary embodiments disclosed herein have been developed in order to overcome the above drawbacks and other problems associated with the conventional arrangement. An aspect of the exemplary embodiments is to provide an LED driving apparatus, an LED driving method, and a computer-readable recording medium which can reduce heat of switch components and control independently each of a plurality of LED arrays.

According to an exemplary embodiment, a non-transitory computer-readable recording medium may include a program for executing a light emitting diode (LED) driving method in an LED driving apparatus which comprises a plurality of LED arrays and a plurality of switching units configured to vary a size of a driving current to flow in each of the plurality of LED arrays, the non-transitory computer-readable recording medium causing a computer to execute the LED driving method including receiving brightness information with respect to each of the plurality of LED arrays; calculating an average driving current of each of the plurality of LED arrays based on the received brightness information; calculating a driving current of each of the plurality of LED arrays in order for each of the plurality of switching units to operate within a predetermined headroom voltage range; calculating a duty cycle of each of the plurality of switching units based on the calculated average driving current and the calculated driving current; and controlling the plurality of switching units based on the calculated driving current and the calculated duty cycle.

According to another exemplary embodiment, a light emitting diode (LED) driving apparatus includes an LED array which emits light; a switching unit which is connected to the LED array and which supplies current to the LED array; and a control unit which varies a duty cycle to thereby vary the current supplied to the LED array and to maintain a desired brightness level of the LED array.

According to the present invention there is provided an apparatus and method as set forth in the appended claims. Other features of the invention will be apparent from the dependent claims, and the description which follows.

Other objects, advantages and salient features of the present disclosure will become apparent from the following detailed description, which, taken in conjunction with the annexed drawings, discloses preferred embodiments.

### BRIEF DESCRIPTION OF THE DRAWINGS

These and/or other aspects and advantages of the exemplary embodiments will become apparent and more readily appreciated from the following description of the exemplary embodiments, taken in conjunction with the accompanying drawings of which:
FIG. 1 is a block diagram illustrating an LED driving apparatus according to an exemplary embodiment;
FIG. 2 is a circuit diagram illustrating an LED driving apparatus according to an exemplary embodiment;
FIG. 3 is a view illustrating a configuration of a control unit according to a first exemplary embodiment;
FIG. 4 is a view illustrating a configuration of a control unit according to a second exemplary embodiment;
FIG. 5 is a view illustrating operation characteristics of a switching unit of FIG. 1; and
FIG. 6 is a flowchart for explaining an LED driving method according to an exemplary embodiment.

Throughout the drawings, like reference numerals will be understood to refer to like parts, components and structures.

### DETAILED DESCRIPTION OF THE EXEMPLARY EMBODIMENTS

Hereinafter, certain exemplary embodiments will be described in detail with reference to the accompanying drawings.

The matters defined herein, such as a detailed construction and elements thereof, are provided to assist in a comprehensive understanding of this description. Thus, it is apparent that exemplary embodiments may be carried out without those defined matters. Also, well-known functions or constructions are omitted to provide a clear and concise description of exemplary embodiments. Further, dimensions of various elements in the accompanying drawings may be arbitrarily increased or decreased for assisting in a comprehensive understanding.

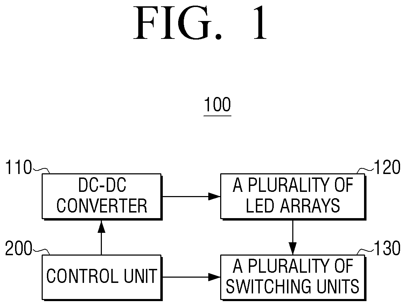

FIG. 1 is a block diagram illustrating an LED driving apparatus according to an exemplary embodiment.

Referring to FIG. 1, the LED driving apparatus 100 according to an exemplary embodiment includes a DC-DC converter 110, a plurality of LED arrays 120, a plurality of switching units 130 and a control unit 200.

The DC-DC converter 110 provides a driving voltage to the plurality of LED arrays 120. Specifically, the DC-DC converter 110 includes a power transistor to perform a switching operation and provides the driving voltage to the plurality of LED arrays 120 by the switching operation of the power transistor. More specifically, the DC-DC converter 110 may convert DC voltage based on a control signal (for example, a pulse width modulation (PWM) signal) provided from the control unit 200, and may provide the converted DC voltage to the plurality of LED arrays 120.

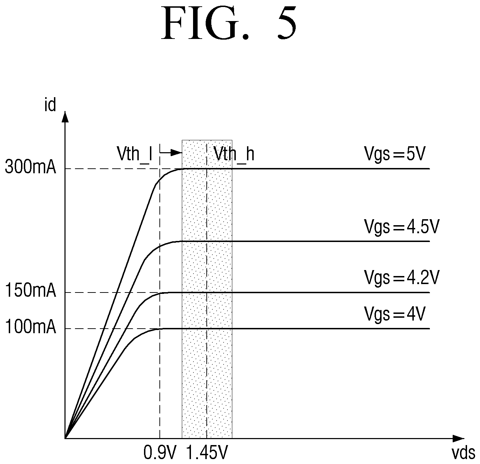

In order for the plurality of LED arrays 120 to operate in a saturation zone, the DC-DC converter 110 may provide the plurality of LED arrays 120 with a sum of a forward voltage of an LED array 120 having the largest forward voltage Vf (or the largest forward bias voltage) among the plurality of LED arrays 120 and a lower voltage of a predetermined headroom voltage range as the driving voltage. According to an exemplary embodiment, the predetermined headroom voltage range, as illustrated in FIG. 5, is a voltage range of the saturation zone to allow the switching component to operate in a linear area.

Since voltage of a saturation zone over a saturation point is used in the present exemplary embodiment, even when the driving voltage provided to the LED array 120 or the forward voltage Vf of the LED array 120 is changed, variation of the driving current to flow in the LED array 120 is insubstantial. The headroom voltage range may be changed to correspond to a change of an operation mode of a display apparatus to which the LED driving apparatus 100 is mounted.

The plurality of LED arrays 120 is formed such that LED arrays 120 to perform a light-emitting operation are connected in parallel. According to exemplary embodiments, one LED array 120 may be configured of one LED light emitting element or multiple LED light emitting elements connected in series.

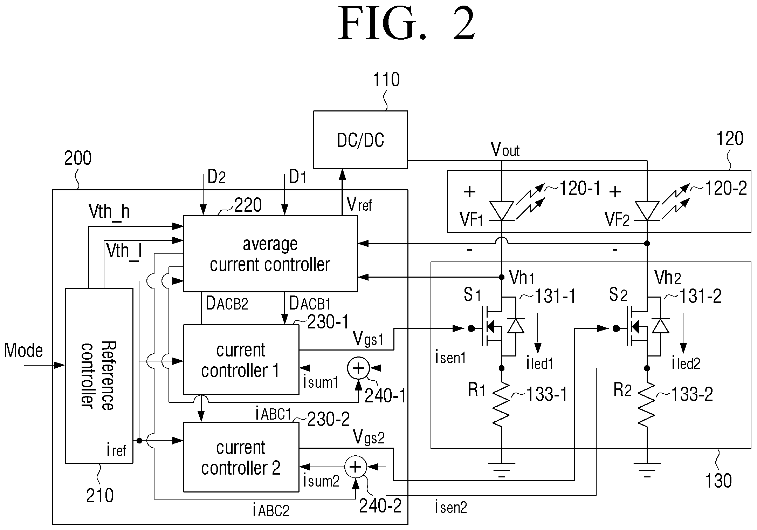

The plurality of switching units 130 is connected in series to each of the plurality of LED arrays 120, and varies a size of the driving current which flows in each of the plurality of LED arrays 120. Specifically, the plurality of switching units 130 includes resistors and switching components, and each of the switching components may be, for example, a bipolar junction transistor (BJT) or a field effect transistor (FET). The configuration and operation of the plurality of switching units 130 will be explained in detail hereinafter with reference to FIG. 2.

The control unit 200 may calculate the driving voltage to be supplied to the plurality of LED arrays 120 in order for each of the plurality of switching units 130 to operate within the predetermined headroom voltage range and may control the DC-DC converter 110 for the calculated driving voltage to be supplied to the plurality of LED arrays 120. Specifically, the control unit 200 may calculate a sum of the forward voltage of the LED array 120 having the largest forward voltage Vf among the plurality of LED arrays 120 and the lower voltage of the predetermined headroom voltage range, and may generate and provide a control signal (for example, a pulse width modulation (PWM) signal) corresponding to the calculated sum of voltage to the DC-DC converter 110 so that the DC-DC converter 110 may generate a driving voltage corresponding to the calculated sum of voltage.

Then, the control unit 200 calculates a driving voltage of each of the plurality of LED arrays 120 and a duty cycle of the switching units 130 corresponding to the plurality of LED arrays 120 in order for each of the plurality of switching units 130 to operate within the predetermined headroom voltage range, and controls the plurality of switching units 130 based on the calculated driving voltage and the calculated duty cycle. Specifically, the control unit 200 receives brightness information with respect to each of the plurality of LED arrays 120, calculates an average driving voltage of each of the plurality of LED arrays 120 based on the received brightness information, calculates a duty cycle of each of the plurality of switching units 130 based on the calculated average driving voltage and the calculated driving voltage, and controls the plurality of switching units 130 based on the calculated driving voltage and the calculated duty cycle. According to an exemplary embodiment, the term "duty cycle" refers to a ratio between a period of time when current flows and a period of time when current does not flow, for an overall time period (a period of time when current flows: a period of time when current does not flow).

The LED driving apparatus 100 according to an exemplary embodiment may solve the problems of efficiency reduction and overheating experienced by a linear switch due to deviation of the forward voltage (Vf) of each of the LED arrays 120 that may occur when the linear mode type circuit is used in order to reduce cost and the number of parts. In addition, the LED driving apparatus 100 according to the exemplary embodiment changes a switch head room voltage level when changing a display mode, thereby preventing current distortion and abnormal protection circuit malfunction.

FIG. 2 is a circuit diagram illustrating an LED driving apparatus according to an exemplary embodiment.

Referring to FIG. 2, the LED driving apparatus 100 includes the DC-DC converter 110, the plurality of LED arrays 120, the plurality of switching units 130, and the control unit 200.

The DC-DC converter 110 provides a driving voltage to the plurality of LED arrays 120. A detailed operation of the DC-DC converter 110 was explained with reference to FIG. 1 in the above description; therefore, a detailed description thereof will be omitted.

The plurality of LED arrays 120 is formed so that LED arrays 120-1 and 120-2 which each perform a light-emitting operation are connected in parallel. In detail, one end of each of the plurality of LED arrays 120 is connected to the DC-DC converter 110 and provided with the driving voltage, and the other end thereof is connected to one of the plurality of switching units 130. FIG. 2 illustrates that the LED arrays 120-1 and 120-2 each include one LED component. Alternatively, the LED arrays 120-1 and 120-2 may be implemented by a plurality of LED components connected in series. Also, in the exemplary embodiment illustrated in FIG. 2, the plurality of LED arrays 120 includes only two LED arrays 120-1 and 120-2; however, the plurality of LED arrays 120 may be implemented to include three or more LED arrays.

Each of the plurality of switching units 130 includes a resistor 133 and a switching component 131. The exemplary embodiment shown in FIG. 2 is illustrated such that the plurality of switching units 130 includes two switching units 130-1 and 130-2; however, when the plurality of LED arrays 120 is implemented to include three or more LED arrays 120, the plurality of switching units 130 may include switching units corresponding to the number of LED arrays 120 that make up the plurality of LED arrays 120.

One end of each of the resistors 133-1 and 133-2 is connected to the corresponding switching component 131-1 or 131-2, and the other end thereof is grounded. According to an exemplary embodiment, the resistor 133 measures a value of current that flows in the LED arrays 120, and voltage of a node which the switching component 131 and the resistor 133 commonly contact is connected to the control unit 200.

One end of each of the switching components 131-1 and 131-2 is connected to a corresponding LED array of the LED arrays 120-1 and 120-2, and the other end thereof is connected to a corresponding resistor of the resistors 133-1 and 133-2. According to an exemplary embodiment, the switching components 131-1 and 131-2 may each be implemented as a field effect transistor (FET) including a drain connected to one end of the LED arrays 120, a gate connected to a corresponding one of the current controllers 230-1 and 230-2 of the control unit 200, and a source grounded through a corresponding one of the resistors 133. Operation characteristics of the FET according to an exemplary embodiment are illustrated in FIG. 5. As illustrated in FIG. 5, the FET may vary current which flows therethrough according to the voltage VGS of the gate.

In the above description, an FET is exemplarily described as being used as the switching component 131. Alternatively, when implementing, a bipolar junction transistor (BJT) may be used as the switching component 131. In this case, the BJT may include a collector connected to one end of an LED array 120, a base connected to the current controller, and an emitter grounded through a resistor. Then, the current to flow therethrough may be varied by varying the base voltage VBE of the BJT.

In the above description, only FET and BJT have been described as examples of the switching component; however, other exemplary embodiments are not limited to using an FET or a BJT. In addition to the FET and BJT, various other types of components may be used as the switching component according to other exemplary embodiments, as long as the other components can vary the size of the current.

The control unit 200 includes a reference controller 210, an average current controller 220, a plurality of current controllers 230, and a plurality of comparators 240. The control unit 200 may be implemented as one chip, or may be implemented as a plurality of chips.

The reference controller 210 may calculate an average current of each of the plurality of LED arrays 120, and generate the upper voltage value Vth_h and lower voltage value Vth_l of the predetermined headroom voltage range. In detail, the reference controller 210 may receive brightness information with respect to each of the plurality of LED arrays 120, and calculate average driving current of each of the plurality of LED arrays 120 based on the received brightness information. The present exemplary embodiment has been described as having a configuration in which the reference controller 210 receives the brightness information from an external source and calculates the average current based on the received brightness information; however, other exemplary embodiments are not limited thereto, and may be implemented such that the reference controller 210 directly receives the average current of each of the plurality of LED arrays 120 from the external source. Also, other exemplary embodiments may be implemented such that the reference controller 210 receives operation mode information of a display apparatus (not illustrated) from the external source, and calculates the average current of each of the plurality of LED arrays 120 by using stored brightness information of an LED array 120 corresponding to the received operation mode information.

Then, the reference controller 210 may generate the upper voltage value Vth_h and lower voltage value Vth_l of the predetermined headroom voltage range. The predetermined headroom voltage range may be input from an external apparatus or may be stored in the reference controller 210. According to an exemplary embodiment, the reference controller 210 stores a plurality of headroom voltage ranges corresponding to operation modes of the display apparatus (not illustrated), and when an operation mode of the display apparatus is input from the external source, the reference controller 210 outputs an upper voltage value Vth_h and lower voltage value Vth_l of a headroom voltage range corresponding to the input operation mode.

The average current controller 220 may calculate a driving voltage to be supplied to the plurality of LED arrays 120 in order for each of the plurality of switching units 130 to operate within the predetermined headroom voltage range, and may control the DC-DC converter 110 to supply the calculated driving voltage to the plurality of LED arrays 120. In detail, the average current controller 220 may calculate a sum of a forward voltage of the LED array 120 having the largest forward voltage among the plurality of LED arrays 120 and the lower voltage of the predetermined headroom voltage range, and may control the DC-DC converter 110 so that a driving voltage corresponding to the calculated sum of the voltages is provided to the plurality of LED arrays 120.

In order for each of the plurality of switching units 130 to operate between the upper voltage value Vth_h and the lower voltage value Vth_l, the average current controller 220 calculates a driving current of each of the plurality of LED arrays 120 and a duty cycle of each of the plurality of switching units 130 corresponding to the plurality of LED arrays 120 by using the calculated average driving current. In detail, in order for each of the plurality of switching units 130 to operate between the upper voltage value and lower voltage value, the average current controller 220 may calculate a driving current of each of the plurality of LED arrays 120 by using the average driving current calculated in the reference controller 210. In more detail, the average current controller 220 may calculate a driving current which has a value which is increased compared to a value of the average driving current calculated with respect to the other LED arrays 120 except for the LED array 120 having the largest forward voltage among the plurality of LED arrays 120. The above-described calculation of the driving current may be performed with respect to the other LED arrays 120 except for the LED array having the largest forward voltage among the plurality of LED arrays 120.

Then, the average current controller 220 calculates a duty cycle with respect to each of the plurality of switching units 130 based on the calculated driving current. In detail, the average current controller 220 may calculate a duty cycle which is lower than the duty cycle of the LED array 120 having the largest forward voltage with respect to the other LED arrays 120 except for the LED array 120 having the largest forward voltage among the plurality of LED arrays 120. For example, since a driving current larger than the calculated average driving current value flows in the other LED arrays 120 except for the LED array 120 which is operated by the largest forward voltage, the duty cycle which is lower than the duty cycle with respect to the LED array 120 having the largest forward voltage may be used to allow current to flow in the other LED arrays 120 except for the LED array 120 having the largest forward voltage.

Then, the average current controller 220 provides the plurality of current controllers 230 with the calculated driving current and duty cycle. In detail, the average current controller 220 may provide the driving current and duty cycle calculated per LED array to each of the current controllers 230 corresponding to the LED arrays 120.

Each of the plurality of current controllers 230 controls a corresponding one of the plurality of switching units 130 based on the calculated driving current and duty cycle. In detail, each of the plurality of current controllers 230 may generate a driving voltage VGS of the corresponding switching component 131 corresponding to the calculated driving current so that current having a value corresponding to the calculated driving current flows in the corresponding LED array 120, and may provide the generated driving voltage of the switching component 131 to the corresponding switching component 131.

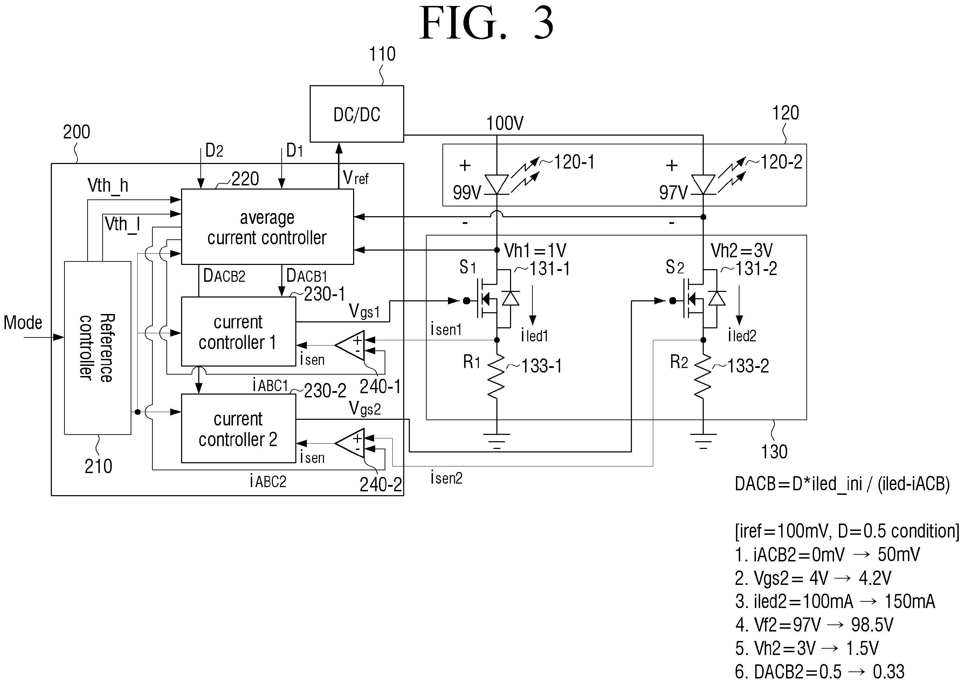

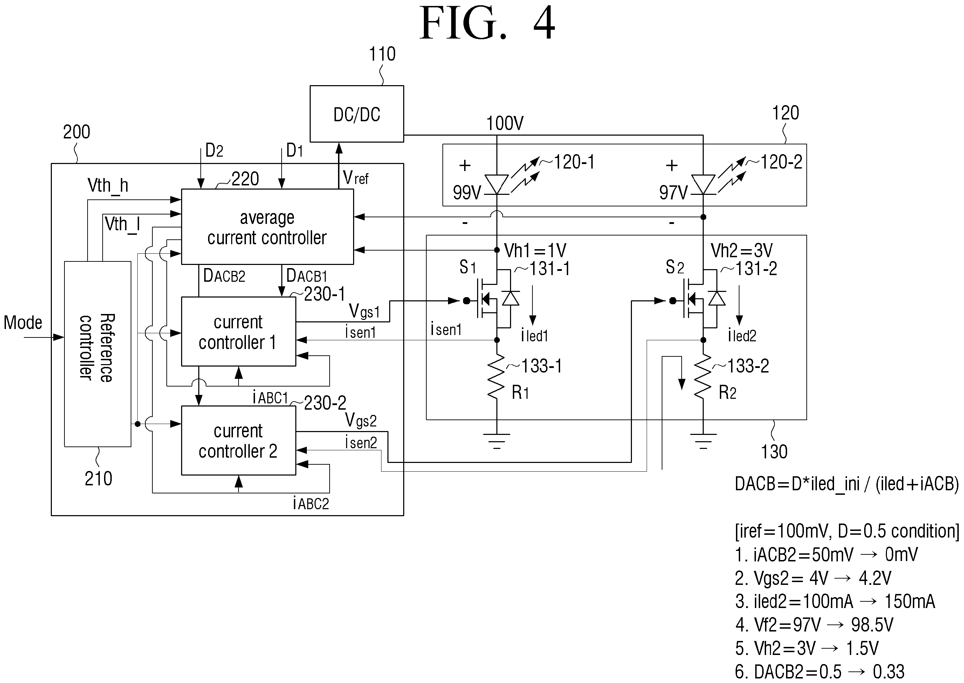

Then, each of the plurality of current controllers 230 may detect the value of current flowing in a corresponding one of the LED arrays 120, and perform feedback control based on the detected value of current. In detail, according to an exemplary embodiment, each of the plurality of current controllers 230 may measure the value of current flowing in the corresponding LED array 120 by using the voltage value of the resistor 133, and perform feedback control with respect to the corresponding switching unit 130 by comparing the measured value of current and the driving current provided from the average current controller 220. According to another exemplary embodiment, the plurality of current controllers 230 may be implemented to receive both the voltage value of the resistor and the driving current as illustrated in FIG. 4. According to another exemplary embodiment, as illustrated in FIG. 3, the plurality of current controllers 230 may be implemented to receive a value having a difference between the voltage value of the resistor 133 and the value of the voltage corresponding to the driving current from an external comparator 240, and to perform feedback control. In the illustrated exemplary embodiments, the plurality of current controllers 230 is illustrated to include only a first current controller 230-1 and a second current controller 230-2; however, when the plurality of LED arrays 120 is implemented to include three or more LED arrays 120, the plurality of current controllers 230 may have current controllers 230 corresponding to the number of the LED arrays 120 forming the plurality of LED arrays 120.

Each of the plurality of comparators 240 outputs a difference between the value of the voltage corresponding to the driving voltage and the voltage value of the corresponding resistor 133. In detail, each of the plurality of comparators 240 may receive the value of the voltage corresponding to the driving voltage calculated in the average current controller 220 and the voltage value of the corresponding resistor 133 of the corresponding switching unit 130, and may provide the difference thereof to the corresponding current controller 230. In the exemplary embodiment illustrated in FIG. 2, the plurality of comparators 240 is illustrated to include only a first comparator 240-1 and a second comparator 240-2; however, when the plurality of LED arrays 120 is implemented to include three or more LED arrays 120, the plurality of comparators 240 may have comparators corresponding to the number of the LED arrays 120 forming the plurality of LED arrays 120.

Hereinafter, an operation of the control unit will be explained in detail with reference to FIGS. 3 and 4.

FIG. 3 is a view illustrating a configuration of a control unit according to a first exemplary embodiment. In detail, the control unit 200 according to the first exemplary embodiment uses comparators 240 as illustrated in FIG. 2.

According to the first exemplary embodiment, a forward voltage Vf of a first LED array 120-1 is 99V, and a forward voltage of a second LED array 120-2 is 97V. The predetermined headroom voltage range is between 1V and 1.5V. A current reference value signal (iref) of each of the LED arrays 120 is 100mV, a current of each of the LED arrays 120 is 100mA, and a basic duty cycle is 0.5.

In the above-described state, the control unit 200 may control the DC-DC converter 110 to output the driving voltage of 100V (the forward voltage of the first LED array (99V) + the lower voltage value of the predetermined headroom voltage range (1V)). When the DC-DC converter 110 outputs the driving voltage of 100V as described above, the headroom voltage of the first switching component 131-1 is 1V, and the headroom voltage of the second switching component 131-2 is 3V.

Since the headroom voltage (3V) of the second switching component 131-2 is not within the predetermined headroom voltage range (1V ∼ 1.5V), the control unit 200 may increase step by step the gate voltage of the second switching component 131-2 so as to increase step by step current flowing in the second LED array 120-2. As a result, the headroom voltage of the second switching component 131-2 is located within the predetermined headroom voltage range (1V ∼ 1.5V). At this time, the gate voltage of the second switching component 131-2 rises from 4V to 4.2V, and the current flowing in the second LED array 120-2 is increased from 100mA to 150mA.

An increase in the current flowing in the second LED array 120-2 causes brightness to increase. Therefore, the control unit 200 may vary the duty cycle of the second switching component 131-2 corresponding to the second LED array 120-2 from 0.5 to 0.33 in order for the second LED array 120-2 to maintain a desired brightness level. As a result, the average brightness of the second LED array 120-2 is the same as that before the driving current is varied.

According to this above-described exemplary embodiment, a loss in power in the second switching component 131-2 may be decreased by approximately 60%. In detail, when being driven by a conventional method, the second switching component 131-2 consumes electrical power of 2.9V x 0.1A x 0.5 = 145mW. However, when being driven as described above, the second switching component 131-2 consumes the electrical power of 1.35V x 0.15Ax0.33=57mW.

FIG. 4 is a view illustrating a configuration of a control unit according to a second exemplary embodiment. In detail, the control unit 200 according to the second exemplary embodiment does not have comparators. Instead, an operation corresponding to an operation performed by the comparator is performed inside the current controllers 230. The control unit 200 according to the second exemplary embodiment is different in the configuration from the control unit 200 as illustrated in FIGS. 2 and 3. However, the operation of the control unit 200 according to the second exemplary embodiment is the same as that of the control unit 200 illustrated in FIGS. 2 and 3.

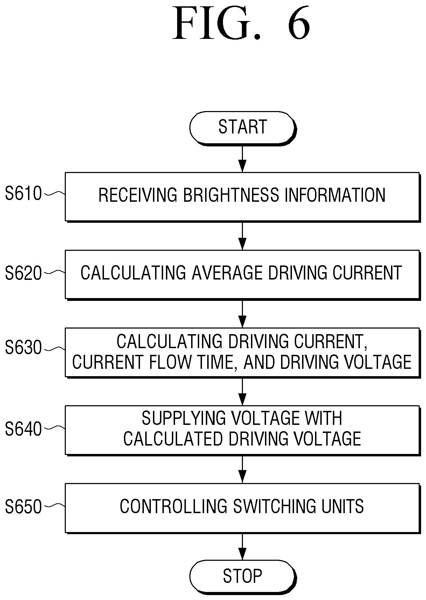

FIG. 6 is a flowchart for explaining a LED driving method according to an exemplary embodiment.

At operation S610, a control unit receives brightness information with respect to each of a plurality of LED arrays. In the present exemplary embodiment, the control unit receives brightness information from an external source, and calculates an average current of each of the plurality of LED arrays in a following step. However, according to other exemplary embodiments, the control unit may be implemented to receive an average current of each of the plurality of LED arrays directly from the external source. Alternatively, according to other exemplary embodiments, the control unit may be implemented to receive operation mode information of a display apparatus (not illustrated) from the external source and to generate pre-stored brightness information of LED arrays corresponding to the received operation mode.

At operation S620, the control unit calculates an average driving current of each of the plurality of LED arrays 120 based on the received brightness information. Specifically, the control unit may calculate the average driving current of each of the plurality of LED arrays corresponding to the received brightness information by using a lookup table in which values of average driving current corresponding to the brightness information are recorded.

At operation S630, the control unit calculates a driving current of each of the plurality of LED arrays in order for each of the plurality of switching units to operate within a predetermined headroom voltage range. Specifically, the control unit may calculate a value of driving current which is increased compared to an average driving current calculated with respect to the other LED arrays except for a LED array having the largest forward voltage among the plurality of LED arrays. The above-described calculation of the driving current may be performed with respect to the other LED arrays except for the LED array having the largest forward voltage among the plurality of LED arrays.

Furthermore, at operation S630, the control unit calculates a duty cycle of each of the plurality of the switching units based on the calculated average driving current and the calculated driving current. Specifically, the control unit may calculate a duty cycle which is lower than the duty cycle of the LED array having the largest forward voltage with respect to the other LED arrays except for the LED array having the largest forward voltage among the plurality of LED arrays. For example, since a driving current which is larger than the calculated average driving current value flows in the other LED arrays except for the LED array which operates according to the largest forward voltage, the duty cycle which is lower than the duty cycle with respect to the LED array having the largest forward voltage may be used to allow current to flow in the other LED arrays except for the LED array having the largest forward voltage.

Furthermore, at operation S630, the control unit calculates a driving voltage that will be supplied to the plurality of LED arrays in order for each of the plurality of switching units to operate within the predetermined headroom voltage range. Specifically, the control unit may calculate a sum of a voltage of the LED array having the largest forward voltage among the plurality of LED arrays and the lower voltage of the predetermined headroom voltage range.

Then, at operation S640, the control unit generates a control signal (for example, a PWM signal) corresponding to the calculated sum of voltages, and provides the generated control signal to a DC-DC converter so that the DC-DC converter may supply the plurality of LED arrays with a driving voltage corresponding to the calculated sum of voltages.

Then, at operation S650, the control unit controls the plurality of switching units based on the calculated driving current and the calculated duty cycle. Specifically, in order for an input driving current to flow into the corresponding LED array, the control unit may generate a driving voltage VGS of the switching unit corresponding to the driving current, and may provide the generated driving voltage of the switching unit to the corresponding switching unit. At this time, the control unit may detect a value of current flowing in each of the LED arrays, and may perform feedback control with respect to the driving current to flow in the plurality of LED arrays.

Accordingly, the LED driving method according to the present exemplary embodiment can solve problems of efficiency reduction and overheating of linear switches caused by excessive heat being be generated due to a deviation of forward voltage per LED array, when a linear mode type circuit is used in order to reduce cost and the number of components. Also, the LED driving method according to the present exemplary embodiment can prevent current distortion and abnormal protection circuit malfunction by varying a switch head room voltage level when a display mode is changed. The LED driving method as illustrated in FIG. 6 may, for example, be carried out on a LED driving apparatus having the configuration as illustrated in FIG. 1, or on LED driving apparatuses having other configurations according to other exemplary embodiments.

Also, the LED driving method according to an exemplary embodiment as described above may be implemented as at least one execution program for executing the LED driving method as described above. The execution program may be stored on a computer-readable recording medium.

Accordingly, each block of the exemplary embodiments may be executed as a computer-recordable code of the computer-readable recording medium. The computer-readable recording medium may be implemented as a device which is capable of storing data which can be read by a computer system.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A LED driving apparatus (100) which drives a plurality of LED arrays (120), the LED driving apparatus comprising:
a DC-DC converter (110) which provides a driving voltage to the plurality of LED arrays (120);
a plurality of switching units (130) which is connected in series to each of the plurality of LED arrays (120) and varies a size of a driving current to flow in each of the plurality of LED arrays (120); and
a control unit (200), **characterized in that** the control unit (200), in order for each of the switching units (130) to operate within a predetermined headroom voltage range, is configured to calculate a driving current of each of the plurality of LED arrays (120) and a duty cycle of a switching unit corresponding to each of the plurality of LED arrays (120), and control the plurality of switching units (130) based on the calculated driving current and the calculated duty cycle.

2. The LED driving apparatus (100) of claim 1, wherein
the control unit (200) is configured to receive brightness information with respect to each of the plurality of LED arrays (120), calculate an average driving current of each of the plurality of LED arrays (120) based on the received brightness information, calculate a driving current of each of the plurality of LED arrays (120) for each of the plurality of switching units (130) to operate within the predetermined headroom voltage range, calculate a duty cycle of each of the plurality of switching units (130) based on the calculated average driving current and the calculated driving current, and control the plurality of switching units (130) based on the calculated driving current and the calculated duty cycle.

3. The LED driving apparatus (100) of claim 1 or claim 2, wherein
the control unit (200) is configured to control the DC-DC converter (110) to provide the plurality of LED arrays (120) with a sum of a forward voltage of an LED array having a largest forward voltage among the plurality of LED arrays (120) and a lower voltage of the predetermined headroom voltage range as the driving voltage.

4. The LED driving apparatus (100) of any one of claims 1 to 3, wherein
the control unit (200) comprises;
a reference controller (210) configured to calculate an average driving current of each of the plurality of LED arrays (120) and generate an upper voltage value and a lower voltage value of the predetermined headroom voltage range;
an average current controller (220) configured to calculate a driving current of each of the plurality of LED arrays (120) and a duty cycle of a switching unit corresponding to each of the plurality of LED arrays (120) by using the calculated average driving current in order for each of the plurality of switching units (130) to operate between the upper voltage value and the lower voltage value; and
a plurality of current controllers (230) configured to control each of the plurality of switching units (130) based on the calculated driving current and duty cycle.

5. The LED driving apparatus (100) of claim 4, wherein
the reference controller (210) is configured to receive brightness information with respect to each of the plurality of LED arrays (120), and calculate the average driving current of each of the plurality of LED arrays (120) based on the received brightness information.

6. The LED driving apparatus (100) of claim 4 or claim 5, wherein
in order for each of the plurality of switching units (130) to operate within the predetermined headroom voltage range, the average current controller (220) is configured to calculate a driving voltage supplied to the plurality of LED arrays (120), and control the DC-DC converter (110) to supply the calculated driving voltage to the plurality of LED arrays (120).

7. The LED driving apparatus (100) of claim 6, wherein
the average current controller (220) is configured to control the DC-DC converter (110) to supply a sum of the forward voltage of the LED array having a largest forward voltage among the plurality of LED arrays (120) and the lower voltage of the predetermined headroom voltage range as the driving voltage with respect to the plurality of LED arrays (120).

8. The LED driving apparatus (100) of any one of claims 4 to 7, wherein
the average current controller (220) is configured to calculate the driving current of each of the plurality of LED arrays (120) by using the calculated average driving current in order for each of the plurality of switching units (130) to operate between the upper voltage value and the lower voltage value, and calculate the duty cycle of each of the plurality of switching units (130) based on the average driving current calculated by the reference controller (210) and the above calculated driving current.

9. The LED driving apparatus (100) of claim 8, wherein
in order for each of the plurality of switching units (130) to operate between the upper voltage value and the lower voltage value, the average current controller (220) is configured to calculate a driving current a value of which is increased compared to the average driving current calculated with respect to the other LED arrays except for the LED array having the largest forward voltage among the plurality of LED arrays (120).

10. The LED driving apparatus (100) of claim 9, wherein
the average current controller (220) is configured to calculate a duty cycle which is lower than a duty cycle of the LED array having the largest forward voltage with respect to the other LED arrays except for the LED array having the largest forward voltage among the plurality of LED arrays (120).

11. The LED driving apparatus (100) of any one of claims 4 to 10, wherein
each of the plurality of switching units (130) comprises:
a resistor (133) one end of which is grounded; and
a switching component (131) connected in series between the LED array and the resistor (133).

12. The LED driving apparatus (100) of claim 11, wherein
each of the current controllers (230) is configured to perform feedback control of a driving current to flow in the LED array by using a voltage value of the resistor (133).

13. The LED driving apparatus (100) of claim 12, wherein
the control unit (200) further comprises a plurality of comparators (240) configured to output a difference between the value of voltage corresponding to the driving current calculated in the average current controller (220) and the voltage value of the resistor (133).

14. The LED driving apparatus (100) of claim 13, wherein
each of the plurality of current controllers (230) is configured to perform feedback control of a driving current to flow in the LED array based on an output of the comparator (240).

15. A LED driving method of a LED driving apparatus which comprises a plurality of LED arrays and a plurality of switching units which is connected in series to each of the plurality of LED arrays and is capable of varying a size of a driving current to flow in each of the plurality of LED arrays, the LED driving method comprising:
providing a driving voltage to the plurality of LED arrays;
calculating a calculated average driving current of each of the plurality of LED arrays;
calculating a driving current of each of the plurality of LED arrays in order for each of the plurality of switching units to operate within a predetermined headroom voltage range (S630);
calculating a duty cycle of each of the plurality of switching units based on the calculated average driving current and the calculated driving current (S630); and
controlling the plurality of switching units based on the calculated driving current and the calculated duty cycle (S650).

## Patentansprüche

1. LED-Treibereinrichtung (100), die mehrere LED-Arrays (120) treibt, wobei die LED-Treibereinrichtung Folgendes umfasst:
einen DC-DC-Wandler (110) (DC: Direct Current - Gleichstrom), der eine Treiberspannung an die mehreren LED-Arrays (120) liefert;
mehrere Schalteinheiten (130), die mit jedem der mehreren LED-Arrays (120) in Reihe geschaltet sind und die eine Stärke des Treiberstroms, der in jedes der mehreren LED-Arrays (120) fließen soll, variieren; und eine Steuereinheit (200), **dadurch gekennzeichnet, dass**, damit jede der Schalteinheiten (130) innerhalb eines vorbestimmten Ansteuerungsreservespannungsbereichs arbeitet, die Steuereinheit (200) dazu konfiguriert ist, einen Treiberstrom von jedem der mehreren LED-Arrays (120) und einen Tastgrad einer Schalteinheit, die jedem der mehreren LED-Arrays (120) entspricht, zu berechnen und die mehreren Schalteinheiten (130) basierend auf dem berechneten Treiberstrom und dem berechneten Tastgrad zu steuern.

2. LED-Treibereinrichtung (100) nach Anspruch 1, wobei die Steuereinheit (200) dazu konfiguriert ist, Helligkeitsinformationen hinsichtlich jedes der mehreren LED-Arrays (120) zu empfangen, einen durchschnittlichen Treiberstrom von jedem der mehreren LED-Arrays (120) basierend auf den empfangenen Helligkeitsinformationen zu berechnen, einen Treiberstrom von jedem der mehreren LED-Arrays (120) für jede der mehreren Schalteinheiten (130) zu berechnen, damit diese innerhalb des vorbestimmen Ansteuerungsreservespannungsbereichs arbeiten, einen Tastgrad von jeder der mehreren Schalteinheiten (130) basierend auf dem berechneten durchschnittlichen Treiberstrom und dem berechneten Treiberstrom zu berechnen und die mehreren Schalteinheiten (130) basierend auf dem berechneten Treiberstrom und dem berechneten Tastgrad zu steuern.

3. LED-Treibereinrichtung (100) nach Anspruch 1 oder Anspruch 2, wobei die Steuereinheit (200) dazu konfiguriert ist, den DC-DC-Wandler (110) so zu steuern, dass die mehreren LED-Arrays (120) mit einer Summe einer Vorwärtsspannung eines LED-Arrays mit einer größten Vorwärtsspannung unter den mehreren LED-Arrays (120) und einer unteren Spannung des vorbestimmten Ansteuerungsreservespannungsbereichs als die Treiberspannung versorgt werden.

4. LED-Treibereinrichtung (100) nach einem der Ansprüche 1 bis 3, wobei die Steuereinheit (200) Folgendes umfasst:
eine Referenzsteuerung (210), die dazu konfiguriert ist, einen durchschnittlichen Treiberstrom von jedem der mehreren LED-Arrays (120) zu berechnen und einen oberen Spannungswert und einen unteren Spannungswert des vorbestimmten Ansteuerungsreservespannungsbereichs zu erzeugen;
eine Durchschnittsstromsteuerung (220), die dazu konfiguriert ist, einen Treiberstrom von jedem der mehreren LED-Arrays (120) und einen Tastgrad einer Schalteinheit, die jedem der mehreren LED-Arrays (120) entspricht, durch Verwenden des berechneten durchschnittlichen Treiberstroms zu berechnen, damit jede der mehreren Schalteinheiten (130) zwischen dem oberen Spannungswert und dem unteren Spannungswert arbeitet; und
mehrere Stromsteuerungen (230), die dazu konfiguriert sind, jede der mehreren Schalteinheiten (130) basierend auf dem berechneten Treiberstrom und Tastgrad zu steuern.

5. LED-Treibereinrichtung (100) nach Anspruch 4, wobei die Referenzsteuerung (210) dazu konfiguriert ist, Helligkeitsinformationen hinsichtlich jedes der mehreren LED-Arrays (120) zu empfangen und den durchschnittlichen Treiberstrom von jedem der mehreren LED-Arrays (120) basierend auf den empfangenen Helligkeitsinformationen zu berechnen.

6. LED-Treibereinrichtung (100) nach Anspruch 4 oder Anspruch 5, wobei, damit jede der mehreren Schalteinheiten (130) innerhalb des vorbestimmten Ansteuerungsreservespannungsbereichs arbeitet, die Durchschnittsstromsteuerung (220) dazu konfiguriert ist, eine Treiberspannung, die an die mehreren LED-Arrays (120) geliefert wird, zu berechnen und den DC-DC-Wandler (110) so zu steuern, dass er die berechnete Treiberspannung an die mehreren LED-Arrays (120) liefert.

7. LED-Treibereinrichtung (100) nach Anspruch 6, wobei die Durchschnittsstromsteuerung (220) dazu konfiguriert ist, den DC-DC-Wandler (110) so zu steuern, dass er eine Summe der Vorwärtsspannung des LED-Arrays mit einer größten Vorwärtsspannung unter den mehreren LED-Arrays (120) und der unteren Spannung des vorbestimmten Ansteuerungsreservespannungsbereichs als die Treiberspannung hinsichtlich der mehreren LED-Arrays (120) liefert.

8. LED-Treibereinrichtung (100) nach einem der Ansprüche 4 bis 7, wobei die Durchschnittsstromsteuerung (220) dazu konfiguriert ist, den Treiberstrom von jedem der mehreren LED-Arrays (120) durch Verwenden des berechneten durchschnittlichen Treiberstroms zu berechnen, damit jede der mehreren Schalteinheiten (130) zwischen dem oberen Spannungswert und dem unteren Spannungswert arbeitet, und den Tastgrad von jeder der mehreren Schalteinheiten (130) basierend auf dem durchschnittlichen Treiberstrom, der durch die Referenzsteuerung (210) berechnet wird, und dem oben berechneten Treiberstrom zu berechnen.

9. LED-Treibereinrichtung (100) nach Anspruch 8, wobei, damit jede der mehreren Schalteinheiten (130) zwischen dem oberen Spannungswert und dem unteren Spannungswert arbeitet, die Durchschnittsstromsteuerung (220) dazu konfiguriert ist, einen Treiberstrom zu berechnen, dessen Wert im Vergleich zu dem durchschnittlichen Treiberstrom, der hinsichtlich der anderen LED-Arrays außer dem LED-Array mit der größten Vorwärtsspannung unter den mehreren LED-Arrays (120) berechnet wurde, erhöht ist.

10. LED-Treibereinrichtung (100) nach Anspruch 9, wobei die Durchschnittsstromsteuerung (220) dazu konfiguriert ist, einen Tastgrad zu berechnen, der niedriger als ein Tastgrad des LED-Arrays ist, das die größte Vorwärtsspannung hinsichtlich den anderen LED-Arrays außer dem LED-Array mit der größten Vorwärtsspannung unter den mehreren LED-Arrays (120) aufweist.

11. LED-Treibereinrichtung (100) nach einem der Ansprüche 4 bis 10, wobei jede der mehreren Schalteinheiten (130) Folgendes umfasst:
einen Widerstand (133), von dem ein Ende masseverbunden ist; und
eine Schaltkomponente (131), die zwischen dem LED-Array und dem Widerstand (133) in Reihe geschaltet ist.

12. LED-Treibereinrichtung (100) nach Anspruch 11, wobei jede der Stromsteuerungen (230) dazu konfiguriert ist, eine Rückkopplungsreglung eines Treiberstroms, der in das LED-Array fließen soll, durch Verwenden eines Spannungswertes des Widerstands (133) durchzuführen.

13. LED-Treibereinrichtung (100) nach Anspruch 12, wobei die Steuereinheit (200) ferner mehrere Komparatoren (240) umfasst, die dazu konfiguriert sind, eine Differenz zwischen dem Spannungswert, der dem in der Durchschnittsstromsteuerung (220) berechneten Treiberstrom entspricht, und dem Spannungswert des Widerstands (133) auszugeben.

14. LED-Treibereinrichtung (100) nach Anspruch 13, wobei jede der mehreren Stromsteuerungen (230) dazu konfiguriert ist, eine Rückkopplungsregelung eines Treiberstroms, der in das LED-Array fließen soll, basierend auf einer Ausgabe des Komparators (240) durchzuführen.

15. LED-Treiberverfahren für eine LED-Einrichtung, die mehrere LED-Arrays und mehrere Schalteinheiten, die mit jedem der mehreren LED-Arrays in Reihe geschaltet sind und dazu fähig sind, eine Stärke eines Treiberstroms zu variieren, der in jedes der mehreren LED-Arrays fließen soll, umfasst, wobei das LED-Treiberverfahren Folgendes umfasst:
Liefern einer Treiberspannung an die mehreren LED-Arrays;
Berechnen eines berechneten durchschnittlichen Treiberstroms von jedem der mehreren LED-Arrays;
Berechnen eines Treiberstroms von jedem der mehreren LED-Arrays, damit jede der mehreren Schalteinheiten innerhalb eines vorbestimmten Ansteuerungsreservespannungsbereichs arbeitet (S630);
Berechnen eines Tastgrades von jeder der mehreren Schalteinheiten basierend auf dem berechneten durchschnittlichen Treiberstrom und dem berechneten Treiberstrom (S630); und
Steuern der mehreren Schalteinheiten basierend auf dem berechneten Treiberstrom und dem berechneten Tastgrad (S650).

## Revendications

1. Appareil de commande de diode électroluminescente (DEL) (100) qui commande une pluralité de réseaux de DEL (120), l'appareil de commande de DEL comprenant :
un convertisseur CC-CC (110) qui fournit une tension d'excitation à la pluralité de réseaux de DEL (120) ;
une pluralité d'unités de commutation (130) qui est raccordée en série à chaque réseau de DEL de la pluralité de réseaux de DEL (120) et fait varier l'importance d'un courant d'excitation destiné à circuler dans chaque réseau de DEL de la pluralité de réseaux de DEL (120) ; et
une unité de commande (200), **caractérisé en ce que** l'unité de commande (200), afin que chaque unité de commutation (130) fonctionne dans une plage de tension de marge de sécurité prédéterminée, est configurée pour calculer un courant d'excitation de chaque réseau de DEL de la pluralité de réseaux de DEL (120) et un cycle de service d'une unité de commutation correspondant à chaque réseau de DEL de la pluralité de réseaux de DEL (120) et commander la pluralité d'unités de commutation (130) en se basant sur le courant d'excitation calculé et le cycle de service calculé.

2. Appareil de commande de DEL (100) selon la revendication 1, dans lequel
l'unité de commande (200) est configurée pour recevoir des informations de luminosité par rapport à chaque réseau de DEL de la pluralité de réseaux de DEL (120), calculer un courant d'excitation moyen de chaque réseau de DEL de la pluralité de réseaux de DEL (120) en se basant sur les informations de luminosité reçues, calculer un courant d'excitation de chaque réseau de DEL de la pluralité de réseaux de DEL (120) pour que chaque unité de commutation de la pluralité d'unités de commutation (130) fonctionne dans la plage de tension de marge de sécurité prédéterminée, calculer un cycle de service de chaque unité de commutation de la pluralité d'unités de commutation (130) en se basant sur le courant d'excitation moyen calculé et le courant d'excitation calculé et commander la pluralité d'unités de commutation (130) en se basant sur le courant d'excitation calculé et le cycle de service calculé.

3. Appareil de commande de DEL (100) selon la revendication 1 ou la revendication 2, dans lequel
l'unité de commande (200) est configurée pour commander le convertisseur CC-CC (110) de sorte à fournir à la pluralité de réseaux de DEL (120) une somme d'une tension directe d'un réseau de DEL ayant la tension directe la plus importante parmi la pluralité de réseaux de DEL (120) et d'une tension inférieure de la plage de tension de marge de sécurité prédéterminée en tant que tension d'excitation.

4. Appareil de commande de DEL (100) selon l'une quelconque des revendications 1 à 3, dans lequel
l'unité de commande (200) comprend :
un dispositif de commande de référence (210) configuré pour calculer un courant d'excitation moyen de chaque réseau de DEL de la pluralité de réseaux de DEL (120) et générer une valeur de tension supérieure et une valeur de tension inférieure de la plage de tension de marge de sécurité prédéterminée ;
un dispositif de commande de courant moyen (220) configuré pour calculer un courant d'excitation de chaque réseau de DEL de la pluralité de réseaux de DEL (120) et un cycle de service d'une unité de commutation correspondant à chaque réseau de DEL de la pluralité de réseaux de DEL (120) à l'aide du courant d'excitation moyen calculé afin que chaque unité de commutation de la pluralité d'unités de commutation (130) fonctionne entre la valeur de tension supérieure et la valeur de tension inférieure ; et
une pluralité de dispositifs de commande de courant (230) configurés pour commander chaque unité de commutation de la pluralité d'unités de commutation (130) en se basant sur le courant d'excitation et le cycle de service calculés.

5. Appareil de commande de DEL (100) selon la revendication 4, dans lequel
le dispositif de commande de référence (210) est configuré pour recevoir des informations de luminosité par rapport à chaque réseau de DEL de la pluralité de réseaux de DEL (120) et calculer le courant d'excitation moyen de chaque réseau de DEL de la pluralité de réseaux de DEL (120) en se basant sur les informations de luminosité reçues.

6. Appareil de commande de DEL (100) selon la revendication 4 ou la revendication 5, dans lequel
afin que chaque unité de commutation de la pluralité d'unités de commutation (130) fonctionne dans la plage de tension de marge de sécurité prédéterminée, le dispositif de commande de courant moyen (220) est configuré pour calculer une tension d'excitation fournie à la pluralité de réseaux de DEL (120) et commander le convertisseur CC-CC (110) pour fournir la tension d'excitation calculée à la pluralité de réseaux de DEL (120).

7. Appareil de commande de DEL (100) selon la revendication 6, dans lequel
le dispositif de courant moyen (220) est configuré pour commander le convertisseur CC-CC (110) de sorte à fournir une somme de la tension directe du réseau de DEL ayant la tension directe la plus importante parmi la pluralité de réseaux de DEL (120) et de la tension inférieure de la plage de tension de marge de sécurité prédéterminée en tant que tension d'excitation par rapport à la pluralité de réseaux de DEL (120).

8. Appareil de commande de DEL (100) selon l'une quelconque des revendications 4 à 7, dans lequel
le dispositif de commande de courant moyen (220) est configuré pour calculer le courant d'excitation de chaque réseau de DEL de la pluralité de réseaux de DEL (120) à l'aide du courant d'excitation moyen calculé afin que chaque unité de commutation de la pluralité d'unités de commutation (130) fonctionne entre la valeur de tension supérieure et la valeur de tension inférieure, et calculer le cycle de service de chaque unité de commutation de la pluralité d'unités de commutation (130) en se basant sur le courant d'excitation moyen calculé par le dispositif de commande de référence (210) et le courant d'excitation calculé ci-dessus.

9. Appareil de commande de DEL (100) selon la revendication 8, dans lequel
afin que chaque unité de commutation de la pluralité d'unités de commutation (130) fonctionne entre la valeur de tension supérieure et la valeur de tension inférieure, le dispositif de commande de courant moyen (220) est configuré pour calculer un courant d'excitation dont une valeur est accrue par comparaison avec le courant d'excitation moyen calculé par rapport aux autres réseaux de DEL à l'exception du réseau de DEL ayant la tension directe la plus importante parmi la pluralité de réseaux de DEL (120).

10. Appareil de commande de DEL (100) selon la revendication 9, dans lequel
le dispositif de commande de courant moyen (220) est configuré pour calculer un cycle de service qui est inférieur à un cycle de service du réseau de DEL ayant la tension directe la plus importante par rapport aux autres réseaux de DEL à l'exception du réseau de DEL ayant la tension directe la plus importante parmi la pluralité de réseaux de DEL (120).

11. Appareil de commande de DEL (100) selon l'une quelconque des revendications 4 à 10, dans lequel
chaque unité de commutation de la pluralité d'unités de commutation (130) comprend :
une résistance (133) dont une extrémité est raccordée à la terre ; et
un composant de commutation (131) raccordé en série entre le réseau de DEL et la résistance (133).

12. Appareil de commande de DEL (100) selon la revendication 11, dans lequel
chaque dispositif de commande de courant de la pluralité de dispositifs de commande de courant (230) est configuré pour effectuer un contrôle à rétroaction d'un courant d'excitation destiné à circuler dans le réseau de DEL à l'aide d'une valeur de tension de la résistance (133).

13. Appareil de commande de DEL (100) selon la revendication 12, dans lequel
l'unité de commande (200) comprend en outre une pluralité de comparateurs (240) configurés pour transmettre une différence entre la valeur d'une tension correspondant au courant d'excitation calculé dans le dispositif de commande de courant moyen (220) et la valeur de tension de la résistance (133).

14. Appareil de commande de DEL (100) selon la revendication 13, dans lequel
chaque dispositif de commande de courant de la pluralité de dispositifs de commande de courant (230) est configuré pour effectuer un contrôle à rétroaction d'un courant d'excitation destiné à circuler dans le réseau de DEL en se basant sur une sortie du comparateur (240).

15. Procédé de commande de DEL d'un appareil de commande de DEL qui comprend une pluralité de réseaux de DEL et une pluralité d'unités de commutation, qui est raccordée en série à chaque réseau de DEL de la pluralité de réseaux de DEL et est capable de faire varier l'importance d'un courant d'excitation destiné à circuler dans chaque réseau de DEL de la pluralité de réseaux de DEL, le procédé de commande de DEL consistant à :
fournir une tension d'excitation à la pluralité de réseaux de DEL ;
calculer un courant d'excitation moyen calculé de chaque réseau de DEL de la pluralité de réseaux de DEL ;
calculer un courant d'excitation de chaque réseau de DEL de la pluralité de réseaux de DEL afin que chaque unité de commutation de la pluralité d'unités de commutation fonctionne dans une plage de tension de marge de sécurité prédéterminée (S630) ;
calculer un cycle de service de chaque unité de commutation d'une pluralité d'unités de commutation en se basant sur le courant d'excitation moyen calculé et le courant d'excitation calculé (S630) ; et
commander la pluralité d'unités de commutation en se basant sur le courant d'excitation calculé et le cycle de service calculé (S650).
